(19) **European Patent Office** Europäisches Patentamt / European Patent Office / Office européen des brevets

(11) **EP 4 264 594 B1**

(12) **FASCICULE DE BREVET EUROPEEN**

(45) Date de publication et mention
de la délivrance du brevet:
**07.05.2025 Bulletin 2025/19**

(21) Numéro de dépôt: **21851827.2**

(22) Date de dépôt: **14.12.2021**

(51) Classification Internationale des Brevets (IPC):
*G10K 11/172* (2006.01)     *F02C 7/045* (2006.01)
*F02K 1/82* (2006.01)     *F02K 1/34* (2006.01)
*E04B 1/86* (2006.01)     *G10K 11/168* (2006.01)
*B64D 33/04* (2006.01)

(52) Classification Coopérative des Brevets (CPC):
**G10K 11/172; B64D 33/06; F02C 7/045;**
**F02K 1/827; G10K 11/168;** F05D 2200/25;
F05D 2240/40; F05D 2250/232; F05D 2250/71;
F05D 2260/963; Y02T 50/60

(86) Numéro de dépôt international:
**PCT/FR2021/052328**

(87) Numéro de publication internationale:
**WO 2022/129778 (23.06.2022 Gazette 2022/25)**

(54) **PANNEAU DE TRAITEMENT ACOUSTIQUE À ENCOMBREMENT RÉDUIT POUR TURBORÉACTEUR**

SCHALLBEHANDLUNGSPLATTE MIT REDUZIERTER VOLUMENLEISTUNG FÜR EIN TURBOSTRAHLTRIEBWERK

REDUCED BULK ACOUSTIC TREATMENT PANEL FOR A TURBOJET ENGINE

(84) Etats contractants désignés:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priorité: **15.12.2020 FR 2013230**

(43) Date de publication de la demande:
**25.10.2023 Bulletin 2023/43**

(73) Titulaire: **SAFRAN AIRCRAFT ENGINES**
**75015 Paris (FR)**

(72) Inventeurs:
• **RIOU, Georges, Jean, Xavier**
**77550 MOISSY-CRAMAYEL (FR)**
• **GEA AGUILERA, Fernando**
**77550 MOISSY-CRAMAYEL (FR)**

(74) Mandataire: **Cabinet Beau de Loménie**
**158, rue de l'Université**
**75340 Paris Cedex 07 (FR)**

(56) Documents cités:
FR-A1- 3 085 783     US-A- 3 821 999
US-A1- 2008 308 345     US-A1- 2013 186 707
US-A1- 2019 063 318

## Description

## Domaine Technique

L'invention concerne un panneau de traitement acoustique pour l'absorption d'ondes sonores, et plus particulièrement une cellule d'absorption acoustique d'un panneau de traitement acoustique pour l'absorption d'ondes sonores à basses fréquences intégrable dans un encombrement réduit.

## Technique antérieure

Les cellules d'absorption acoustique sont destinées à réduire les bruits indésirables. Cette réduction est faite pour diverses raisons, par exemple pour protéger l'oreille humaine contre les dommages ou pour réduire l'impact du bruit. Dans les équipements et pièces techniques, une protection acoustique peut être nécessaire pour assurer le respect des normes en vigueur en matière d'émissions sonores, ainsi que pour les protéger des dommages (fatigue sonore). L'un des défis des turboréacteurs à grand taux de dilution est la certification des niveaux sonores lors des opérations de décollage et d'atterrissage d'un avion. En effet, les niveaux sonores émis par les avions sont soumis à des réglementations internationales de plus en plus strictes afin de limiter l'empreinte acoustique aux alentours des aéroports. Par ailleurs, la fatigue sonore peut se produire, par exemple, sur les volets d'atterrissage des avions à proximité des moteurs, ou sur les composants de charge utile des systèmes de lancement spatial, en raison du bruit important généré lors du lancement.

Classiquement, la réduction du bruit d'un turboréacteur, et plus précisément celui rayonné par l'interaction entre les rotors et leurs environnements, est réalisée à l'aide de panneaux absorbants disposés au niveau des surfaces mouillées des conduits dans lesquels se propagent les ondes sonores. On entend par surfaces mouillées, les surfaces en contact avec un écoulement fluide. Ces panneaux sont des matériaux composites de type sandwich emprisonnant un nid d'abeille, dont les propriétés absorbantes sont en partie obtenues grâce au principe des résonateurs de Helmholtz formés par les alvéoles du nid d'abeille formant des cellules d'absorption acoustique.

Un résonateur de Helmholtz est constitué d'une cavité résonante et d'un ou plusieurs col(s) s'étendant à l'intérieur de la cavité chacun depuis un orifice formé dans une paroi et permettant à la cavité résonante de communiquer avec le milieu environnant dans lequel se propagent les ondes à atténuer. Le col assure ainsi la communication entre le milieu ambiant et la cavité d'air interne. Une fois le dispositif optimisé, le col assure un effet de dissipation visco-thermique, qui correspond à un mouvement rapide et alterné des ondes sonores au travers des cols provoquant de la dissipation par frottement.

Dans les technologies de traitement classique, la longueur du col est faible devant la hauteur de la cavité. Plus précisément, dans les technologies classiques, la longueur du col est égale à l'épaisseur d'une paroi en tôle composite (carbone + résine) qui constitue la surface mouillée du traitement, car le col est obtenu par simple perforation de cette paroi. On optimise le fonctionnement du résonateur de Helmholtz en dimensionnant la cavité d'air de façon à obtenir le maximum de vitesse acoustique au niveau du col. Cette optimisation impose des hauteurs de cavité de l'ordre du quart de la longueur d'onde de la fréquence principale à traiter. Ce qui représente pour une onde sonore à une fréquence de 100 Hz dans l'air ambiant ayant donc une longueur d'onde de 3,4 m, une hauteur de cavité nécessaire de :

$$\frac{\lambda}{4} = \frac{3,4}{4} = 0,85m$$

Elle offre par ailleurs des propriétés très intéressantes quant à l'importante largeur de bande fréquentielle couverte.

Cependant, les tendances actuelles pour l'optimisation des systèmes de propulsion sont orientées vers la diminution des nombres d'aubes et la réduction de la vitesse de rotation des ensembles tournants tels que le fan (soufflante) dans les architectures carénées (par exemple, un turboréacteur désigné par le terme anglais « turbofan ») et/ou les hélices dans les architectures non-carénées (par exemple, moteur à soufflante non carénée, notamment une double soufflante contrarotative non carénée ou « contra-rotating open rotor » en anglais). Il en résulte un abaissement des fréquences du rayonnement acoustique.

L'optimisation des panneaux de traitement nécessite alors l'augmentation de leur épaisseur pour pouvoir augmenter la hauteur de la cavité et ainsi diminuer la fréquence d'accord des cavités résonantes des panneaux. Cela rend les panneaux incompatibles avec les contraintes de masse et d'encombrement associées aux nouvelles architectures de type UHBR (Ultra High Bypass Ratio), c'est-à-dire à très fort taux de dilution.

En effet, la mise en place de traitements acoustiques conventionnels sans cône et accordés à ces fréquences requiert des cavités d'épaisseurs de 20 à 25 cm. Et, avec des tailles de nacelles dites minces et une signature acoustique démarrant à des fréquences particulièrement basses, les turboréacteurs à très fort taux de dilution ne peuvent pas utiliser de tels panneaux de traitement acoustique et nécessitent donc l'utilisation de revêtements acoustiques spécifiques. Plus précisément, en complément des structures absorbantes classiques traitant les moyennes et hautes fréquences, il y a un besoin de traitement acoustique pouvant atténuer efficacement les fréquences basses de l'ordre de 150 à 800 Hz avec des panneaux de traitement acoustique présentant un encombrement réduit.

Il est toujours possible de dimensionner le résonateur de Helmholtz de sorte qu'il soit efficace sur des fréquences plus basses, pour un encombrement radial réduit, par exemple, en jouant à la fois sur la hauteur du col et sur le volume de la cavité résonante.

La contrepartie, pour ce type de dimensionnement sous contrainte d'un encombrement réduit donné, est que la bande de fréquence sur laquelle agit le traitement de manière optimale se trouve drastiquement réduite lorsque la fréquence diminue. En effet l'insertion d'un cône dans les cavités résonnantes en nid d'abeille permet d'augmenter la hauteur du col et donc de ramener la hauteur de la cellule à 7 ou 8 cm plutôt que les 20 à 25 cm de hauteur pour une cellule sans cône interne. Cependant, cela se fait au prix d'atténuations quasiment nulles sur les fréquences harmoniques de deuxième et troisième ordre de la soufflante.

Cette restriction concernant la largeur de bande fréquentielle d'atténuation est très pénalisante, car la variation du régime de la soufflante selon les phases de vol et la masse de l'avion engendre des évolutions importantes de sa fréquence d'émission sonore. De ce fait, le traitement dimensionné de cette façon ne sera efficace que pour une plage de régime extrêmement étroite, notamment lorsque l'entrée du cône est à proximité de la tôle perforée.

Une solution connue pour atténuer des fréquences très basses avec des résonateurs relativement minces est d'insérer un large pavillon de forme conique ou hyperbolique dans une cavité ajustée aux dimensions de ce pavillon, l'objectif étant ici d'accroitre la distance parcourue par l'onde sonore dans la cavité résonnante.

Une application aéronautique des cellules d'absorption acoustique nécessite de réaliser un tel pavillon avec une épaisseur de paroi de pavillon très mince de l'ordre de 0,1 à 0,2 mm. Cependant, les niveaux d'excitation acoustique importants, de l'ordre de 140 à 150 dB, et les vibrations mécaniques potentielles engendrées par le moteur, ne permettent pas à un pavillon ayant des parois d'une telle épaisseur de rester suffisamment rigide pour conserver sa géométrie et fonctionner de manière optimale.

Pour permettre son fonctionnement et augmenter la rigidité du pavillon, une solution connue de la demande FR 1 858 101 consiste à ajouter des languettes pour attacher le col du cône aux parois latérales ou à la paroi de fond de la cellule afin de minimiser ses déplacements.

Une autre solution connue propose d'introduire un conduit en guide d'onde de forme conique dans les cavités d'un résonateur de type nid d'abeille pouvant être placé à plusieurs hauteurs éventuellement en présence d'un septum sous forme de couches poreuses.

Il est aussi connu une solution proposant un septum, sous la forme d'une surface ou toile poreuse, présentant une atténuation acoustique variable et en forme conique dans des résonateurs acoustiques en forme de cavités en nid d'abeille.

Une autre solution connue propose un procédé de fabrication d'un traitement acoustique avec des cavités en nid d'abeille et un septum de séparation en forme conique dans chaque cavité, le septum étant réalisé à l'aide d'une surface ou d'une toile poreuse.

D'autres solutions connues proposent d'incliner les cavités des résonateurs afin d'augmenter le chemin parcouru par les ondes acoustiques sans augmenter l'épaisseur du traitement.

Il est aussi un connu du document FR 3 070 529 un panneau acoustique à résonateurs dans lequel a été ajouté des obstacles dans les cavités résonantes des traitements acoustiques afin d'augmenter la distance parcourue par les ondes acoustiques sans augmenter l'épaisseur du traitement acoustique, ce qui permet d'améliorer l'atténuation acoustique en basse fréquence.

Une autre solution connue consiste à utiliser des cavités repliées pour augmenter la distance parcourue par les ondes acoustiques.

Une autre solution connue consiste à utiliser des cavités avec un col allongé en forme cylindrique afin d'améliorer les performances acoustiques à basses fréquences. US 2013/186707 A1 divulgue un absorbeur acoustique.

## Exposé de l'invention

L'invention vise à fournir une cellule d'absorption acoustique pour l'absorption d'ondes sonores à basses fréquences de hauteur de cavité réduite et dont la plage fréquentielle de traitement puisse être modulée selon le besoin.

Un objet de l'invention propose une cellule d'absorption acoustique comprenant une paroi de fond acoustiquement opaque, une paroi d'entrée acoustiquement poreuse, comme par exemple une tôle perforée, une enceinte s'étendant selon une direction axiale entre une première extrémité axiale solidaire de la paroi de fond et une seconde extrémité axiale solidaire de la paroi d'entrée, et un premier pavillon acoustique s'étendant à l'intérieur de l'enceinte entre un premier orifice du premier pavillon et un second orifice du premier pavillon plus petit que ledit premier orifice du premier pavillon, le premier orifice étant en regard de ladite paroi d'entrée.

Selon une caractéristique générale de l'objet, la cellule d'absorption acoustique comprend un second pavillon s'étendant à l'intérieur de l'enceinte entre un premier orifice du second pavillon et un second orifice du second pavillon plus petit que ledit premier orifice du second pavillon.

De préférence, le premier pavillon s'étend à l'intérieur de l'enceinte selon une direction parallèle à ou confondue avec la direction axiale de l'enceinte et le second pavillon s'étend à l'intérieur de l'enceinte selon une direction parallèle à ou confondue avec ladite direction axiale de l'enceinte.

De préférence, le premier pavillon et le second pavillon sont disposés l'un en dessous de l'autre, alignés ou non, c'est-à-dire l'un à la suite de l'autre selon une direction générale parallèle ou confondue à leur direction axiale le long de laquelle ils s'étendent, autrement dit une direction parallèle ou confondue avec la direction axiale de la cellule.

On entend par paroi acoustiquement poreuse, une paroi qui prend des orifices permettant de laisser passer une partie des ondes acoustiques sans les altérer significativement que ce soit en termes d'intensité ou de fréquence. On entend par paroi acoustiquement opaque, une paroi ne laissant passer aucune onde acoustique sans l'altérer au moins en partie, notamment en intensité. Une paroi acoustiquement opaque réfléchira la plus grande partie des ondes acoustiques incidentes.

L'ajout d'un second pavillon à l'intérieur de l'enceinte de la cellule d'absorption acoustique permet de dupliquer les capacités d'atténuation en basses fréquences, et ainsi d'avoir un second pic d'atténuation basse fréquence centré sur une fréquence différente. Cela permet donc d'augmenter la plage fréquentielle de traitement de la cellule d'absorption acoustique.

Selon un premier aspect de la cellule d'absorption acoustique, le premier orifice du second pavillon peut être disposé en regard du second orifice du premier pavillon et le second orifice du second pavillon peut être disposé en regard de ladite paroi de fond.

Dans une variante, les deux pavillons peuvent être coaxiaux et imbriqués au moins partiellement l'un dans l'autre.

Dans une autre variante, le premier pavillon et le second pavillon peuvent être juxtaposés l'un à côté de l'autre, les deux pavillons s'étendant selon deux axes parallèles. Dans une autre variante, la cellule d'absorption acoustique peut comprendre une pluralité de pavillons juxtaposés les uns à côté des autres, les pavillons s'étendant selon des axes parallèles entre eux.

Dans une autre variante, la cellule d'absorption acoustique peut comprendre un troisième pavillon s'étendant selon une direction parallèle ou confondue avec la première direction axiale entre un premier orifice et un second orifice, le premier et le second pavillons étant juxtaposés l'un à côté de l'autre et débouchant tous les deux via leur second orifice dans le troisième pavillon.

Selon un deuxième aspect de la cellule d'absorption acoustique, l'enceinte peut s'étendre entre la paroi de fond et la paroi d'entrée en formant un angle d'inclinaison, β, non nul et non orthogonal avec la paroi d'entrée, d'une part, et avec la paroi de fond, d'autre part.

L'utilisation de cellules inclinées par rapport à la surface de contact avec l'écoulement fluidique extérieur permet d'augmenter la longueur acoustique de la cavité définie par l'enceinte sans modifier la hauteur de la cellule séparant la paroi de fond et la paroi d'entrée mesurée selon une direction orthogonale aux parois de fond et d'entrée. Cette augmentation de la longueur acoustique de la cavité permet de descendre les fréquences d'accord de la cellule d'absorption acoustique, c'est-à-dire de centrer la ou les fréquence(s) d'absorption acoustique de la cellule sur une fréquence plus basses que dans une configuration non inclinée.

Selon un troisième aspect de la cellule d'absorption acoustique, l'angle d'inclinaison β est compris de préférence entre 0° et 60°, 0° excl.

Selon un quatrième aspect de la cellule d'absorption acoustique, l'enceinte peut définir un cylindre dont les génératrices s'étendent selon la première direction axiale et dont la base présente une forme circulaire ou polygonale.

Selon un cinquième aspect de la cellule d'absorption acoustique, au moins l'un des premier pavillon et second pavillon peut comprendre des surfaces présentant une rugosité non nulle, afin d'augmenter les effets de dissipation visqueuse dans le pavillon. Les rugosités peuvent prendre la forme de rainures ou de bosses sur les surfaces internes et/ou externes des parois des pavillons.

Selon un sixième aspect de la cellule d'absorption acoustique, la section du second orifice du premier pavillon peut être égale à la section du second orifice du second pavillon, et le rapport entre la section de l'enceinte à sa seconde extrémité et la section du second orifice du premier pavillon peut être compris entre 2 et 100.

Selon un septième aspect de la cellule d'absorption acoustique, la distance entre le premier orifice et le second orifice du premier pavillon selon la direction axiale peut être égale à la distance entre le premier orifice et le second orifice du second pavillon selon la direction axiale, et le rapport entre la distance entre le premier orifice et le second orifice du premier pavillon selon la direction axiale et la hauteur de l'enceinte mesurée selon la direction axiale entre sa première extrémité et sa seconde extrémité peut être compris entre 0,2 et 0,6.

**Selon un** huitième aspect de la cellule d'absorption acoustique, à sa première ouverture le premier pavillon peut former un premier angle d'ouverture, $\alpha_1$, avec un plan parallèle à la paroi d'entrée de la cellule, et à sa première ouverture le second pavillon peut former un second angle d'ouverture, $\alpha_2$, avec un plan parallèle à la paroi d'entrée de la cellule.

Selon un neuvième aspect de la cellule d'absorption acoustique, le second angle d'ouverture $\alpha_2$ peut être identique au premier angle d'ouverture $\alpha_1$. Dans cette configuration, les deux angles d'ouverture sont compris de préférence entre 60° et 90°.

Selon un dixième aspect de la cellule d'absorption acoustique, le premier pavillon et le second pavillon peuvent être de forme et de dimensions identiques, le premier pavillon et le second pavillon comprenant chacun une portion cylindrique de section égale à la section de leur second orifice, le rapport entre la longueur de la portion cylindrique selon la direction axiale et la longueur du pavillon selon la direction axiale étant inférieure ou égale à 0,8.

La conception de cellules d'absorption acoustique avec un premier pavillon et un second pavillon de forme et de dimensions identiques permet de réduire les coûts de fabrication.

Dans une variante, les formes et les dimensions du premier et du second pavillons peuvent être différentes.

Selon un onzième aspect de la cellule d'absorption acoustique, la cellule peut comprendre en outre une paroi interne poreuse, ou septum, s'étendant à l'intérieur de l'enceinte et sur le premier orifice du second pavillon. Autrement dit, la paroi interne poreuse est disposée à l'intérieur de l'enceinte et le second pavillon est en contact avec la paroi interne poreuse à l'extrémité portant son premier orifice.

Selon un douzième aspect de la cellule d'absorption acoustique, la paroi interne, ou septum, peut être parallèle à ladite paroi d'entrée.

Selon un treizième aspect de la cellule d'absorption acoustique, le premier pavillon peut comprendre une portion présentant une pente continue non droite s'étendant depuis son premier orifice, et le second pavillon peut comprendre une portion présentant une pente continue non droite s'étendant depuis son premier orifice.

Dans un autre objet de l'invention, il est proposé un panneau de traitement acoustique destiné à être disposé sur au moins une paroi d'un aéronef en contact avec un écoulement fluidique, le panneau comprenant une pluralité de cellules d'absorption acoustique tel que défini ci-dessus.

Dans un autre objet de l'invention, il est proposé un turboréacteur destiné à être monté sur un aéronef, le turboréacteur comprenant au moins un panneau de traitement acoustique tel que défini ci-dessus. Le turboréacteur peur être un turboréacteur caréné ou un turboréacteur non caréné. Dans le cas d'un turboréacteur non caréné, le panneau acoustique peut être installé au niveau de la structure qui entoure le générateur de gaz, et qui est donc au contact du flux extérieur et/ou du flux généré par la soufflante.

Dans un autre objet de l'invention il est proposé un aéronef comprenant au moins un turboréacteur tel que défini ci-dessus.

**Brève description des dessins**

L'invention sera mieux comprise à la lecture faite ci-après, à titre indicatif mais non limitatif, en référence aux dessins annexés sur lesquels :

[Fig. 1] La figure 1 présente une vue en section d'un turboréacteur selon un mode de réalisation de l'invention, dans un plan longitudinal du turboréacteur.

[Fig. 2] La figure 2 illustre une vue partielle en perspective d'un panneau de traitement acoustique selon un mode de réalisation de l'invention.

[Fig. 3] La figure 3 présente schématiquement une vue en perspective d'une cellule d'absorption acoustique selon un premier mode de réalisation de l'invention.

[Fig. 4] La figure 4 présente schématiquement une vue en coupe d'une pluralité de cellules d'absorption acoustique selon un premier mode de réalisation de l'invention.

[Fig. 5] La figure 5 représentation graphiquement l'évolution du coefficient d'absorption en fonction de la fréquence de l'onde sonore en Hertz selon deux configurations différentes de cellule d'absorption acoustique.

[Fig. 6] La figure 6 illustre schématiquement une vue en perspective d'une cellule d'absorption acoustique selon un second mode de réalisation de l'invention.

[Fig. 7] La figure 7 illustre une vue en coupe d'une pluralité de cellules d'absorption acoustique selon un troisième mode de réalisation de l'invention.

[Fig. 8] La figure 8 illustre une vue en coupe d'une pluralité de cellules d'absorption acoustique selon un quatrième mode de réalisation de l'invention.

[Fig. 9] La figure 9 illustre une vue en coupe d'une pluralité de cellules d'absorption acoustique selon un cinquième mode de réalisation de l'invention.

**Description des modes de réalisation**

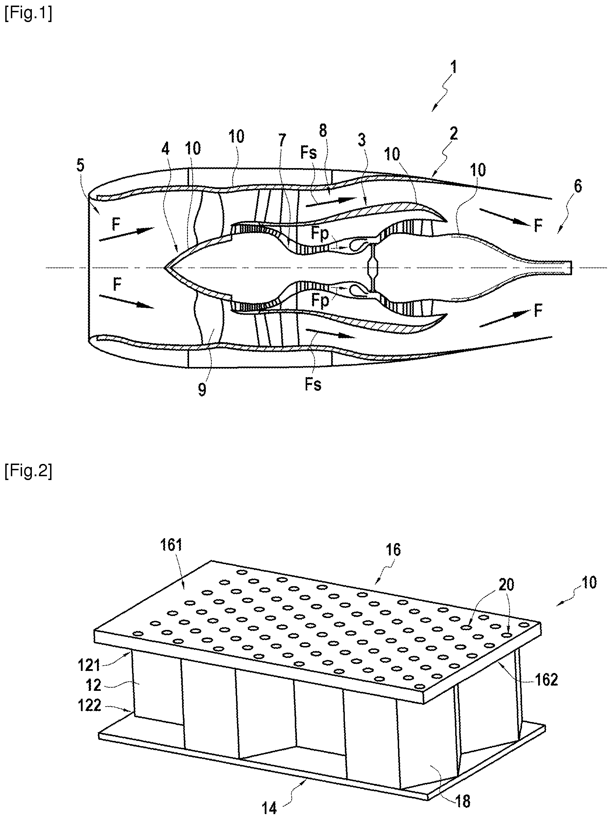

Sur la figure 1 est représentée une vue en section d'un turboréacteur 1 selon un mode de réalisation non-limitatif de l'invention, dans un plan longitudinal du turboréacteur 1.

Le turboréacteur 1 comprend une nacelle 2, un carter intermédiaire 3 et un carter interne 4. La nacelle 2 et les deux carters 3 et 4 sont coaxiaux. La nacelle 2 définit à une première extrémité un canal d'entrée 5 d'un écoulement de fluide et à une seconde extrémité, opposée à la première extrémité, un canal d'échappement 6 d'un écoulement de fluide. La nacelle 2 et le carter intermédiaire 3 délimitent entre eux une veine primaire 7 d'écoulement de fluide. Le carter intermédiaire 3 et le carter interne 4 délimitent entre eux une veine secondaire 8 d'écoulement de fluide. La veine primaire 7 et la veine secondaire 8 sont disposés selon une direction axiale du turboréacteur entre le canal d'entrée 5 et le canal d'échappement 6.

Le turboréacteur 1 comprend en outre une soufflante 9 configurée pour délivrer un flux d'air F comme écoulement fluidique, le flux d'air F étant divisé en sortie de la soufflante en un flux primaire $F_P$ circulant dans la veine primaire 7 et en un flux secondaire $F_S$ circulant dans la veine secondaire 8.

Le turboréacteur 1 comprend en outre au moins un panneau de traitement acoustique 10 configuré pour atténuer les ondes acoustiques émises par le turboréacteur 1 avant que ces ondes ne s'échappent à l'extérieure, radialement, de la nacelle 2 du turboréacteur 1.

Dans le cas d'une turbomachine non-carénée, le traitement acoustique serait configuré pour atténuer ou limiter les réfractions des ondes acoustiques rayonnées par les hélices.

Chaque panneau de traitement acoustique 10 est configuré pour atténuer des ondes acoustiques dont la fréquence appartient à une plage de fréquences prédéterminée. Dans le mode de réalisation illustré sur la figure 1, les panneaux 10 de traitement acoustique sont intégrés à la nacelle 2, au carter intermédiaire 3 et au carter interne 4. Sur le carter interne 4, les panneaux 10 de traitement acoustique sont intégrés, d'une part, sur la portion en amont du carter intermédiaire 3 selon la direction axiale et notamment sur la portion portant la soufflante 9, et, d'autre part, sur une portion en aval du carter intermédiaire 3.

Sur la figure 2 est représentée une vue partielle en perspective d'un panneau de traitement acoustique 10 selon un mode de réalisation de l'invention.

En référence à la figure 2, le panneau de traitement acoustique 10 comporte un cœur 12, une couche ou paroi réfléchissante 14 et une couche ou paroi d'entrée 16.

Le cœur 12 présente une structure en nid d'abeille. Plus précisément, le cœur 12 comporte une pluralité de cellules acoustiques 18, ou alvéoles, agencées selon une structure en nid d'abeille connue.

Chaque alvéole 18 débouche sur une première face 121 du cœur 12 et sur une deuxième face 122 du cœur 18 située à l'opposé de la première face 121.

La première face 121 du cœur 12 est destinée à être orientée vers la veine d'écoulement d'air, primaire 7 ou secondaire 8 selon l'emplacement du panneau de traitement acoustique 10. La deuxième face 122 du cœur 12 est destinée à être orientée à l'opposé de la veine d'air.

Selon le mode de réalisation, le cœur 12 peut être réalisé en métal, ou dans un matériau composite, tel qu'un matériau composite formé de fibres de carbone noyées dans une matrice de résine durcie.

La couche réfléchissante 14 est adaptée pour réfléchir des ondes acoustiques présentant une fréquence appartenant à la plage de fréquences prédéterminée.

La couche réfléchissante 14 s'étend en regard de la deuxième face 122 du cœur 12, en étant au contact de la deuxième face 122. Plus précisément, la couche réfléchissante 14 est solidaire de la deuxième face 122 du cœur 12, par exemple collée à la deuxième face 122 du cœur 12.

Selon le mode de réalisation, la couche réfléchissante 14 peut être réalisée en métal ou dans un matériau composite, tel qu'un matériau composite formé de fibres de carbone noyées dans une matrice de résine durcie. Dans une variante, la couche formant le fond des alvéoles 18 peut être non réfléchissante.

La couche d'entrée 16 s'étend en regard de la première face 121 du cœur 12, en étant au contact de la première face 121. Plus précisément, la couche d'entrée 16 est solidaire de la première face 121 du cœur 12, par exemple collée à la première face 121 du cœur 12.

La couche d'entrée 16 est une plaque monobloc perforée comprenant une pluralité d'orifices 20 traversant la couche d'entrée 16 depuis la première face 161 jusqu'à la seconde face 162 de la couche d'entrée 16. Chaque orifice 20 débouche sur une alvéole 18 du cœur 12, plusieurs orifices 20 pouvant déboucher sur une même alvéole 18.

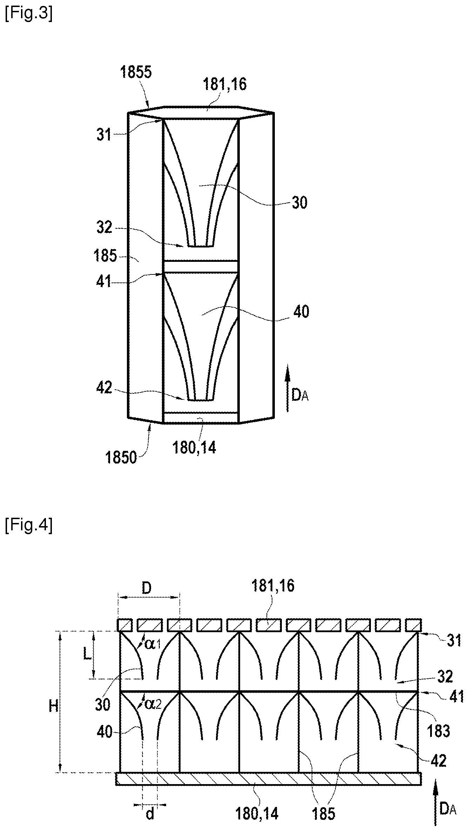

Sur la figure 3 est illustré schématiquement une vue en perspective d'une cellule d'absorption acoustique 18 selon un premier mode de réalisation de l'invention.

L'alvéole 18 comprend une paroi de fond 180 acoustiquement opaque, une paroi d'entrée 181 acoustiquement poreuse, et une enceinte 185 cylindrique à base hexagonale s'étendant entre la paroi de fond 180 et la paroi d'entrée 181.

La paroi de fond 180 est formée par la couche réfléchissante 14 du panneau 10 de traitement acoustique, tandis que la paroi d'entrée 181 est formée par la couche d'entrée 16 du panneau de traitement acoustique 10.

Le cylindre formé par l'enceinte 185 défini une direction axiale $D_A$ correspondant à la direction des génératrices du cylindre. En outre, selon le mode de réalisation, la base du cylindre formé par l'enceinte 185 peut avoir une forme autre qu'hexagonale. La base peut être triangulaire, ou quadrilatérale, ou circulaire ou polygonale par exemple.

Selon la direction axiale $D_A$, l'enceinte 185 comprend une première extrémité axiale 1850 solidaire de la paroi de fond 180, et une seconde extrémité axiale 1855 solidaire de la paroi d'entrée 181.

Chaque alvéole 18 du panneau 10 de traitement acoustique comprend en outre deux pavillons acoustiques 30 et 40 à l'intérieur de l'enceinte 185. Le premier pavillon acoustique 30 s'étend selon la direction axiale $D_A$, entre une première ouverture 31 et une seconde ouverture 32, la seconde ouverture 32 étant plus petite que la première ouverture 31. De même, le second pavillon acoustique 40 s'étend selon la direction axiale $D_A$ entre une première ouverture 41 et une seconde ouverture 42, la seconde ouverture 42 étant plus petite que la première ouverture 41.

Dans le mode de réalisation illustré sur la figure 3, le premier pavillon 30 et le second pavillon 40 sont alignés selon la direction axiale $D_A$. Plus particulièrement, le premier orifice 31 du premier pavillon 30 est en regard de la paroi d'entrée 181, le second orifice 32 du premier pavillon 30 et le premier orifice 41 du second pavillon 40 sont en regard l'un de l'autre, voire dans un même plan, et le second orifice 42 du second pavillon 40 est en regard de la paroi de fond 180.

Sur la figure 4 est représenté schématiquement une vue en coupe d'une pluralité de cellules d'absorption acoustique 18 selon le premier mode de réalisation de l'invention.

Comme cela est illustré sur la figure 4, chaque alvéole comprend une section présentant un premier diamètre équivalent D et de hauteur H, la hauteur H étant mesurée selon la direction axiale $D_A$, et le premier diamètre équivalent D étant mesuré dans le plan dans lequel s'étend la paroi d'entrée 181, et correspondant au diamètre du cercle circonscrit à la base du cylindre formé par l'enceinte 185.

Le premier orifice 31 du premier pavillon 30 et le premier orifice 41 du second pavillon 40 présentent chacun un diamètre équivalent égal au premier diamètre équivalent D de l'alvéole 18. Le second orifice 32 du premier pavillon 30 et le second orifice 42 du second pavillon 40 présentent le même diamètre équivalent qui est égal à un second diamètre équivalent d.

Le premier pavillon 30 présente une longueur égale à la longueur du second pavillon 40. La longueur L de chacun des deux pavillons 30 et 40 est mesurée selon la même direction que la hauteur H de l'alvéole 18, en l'occurrence la direction axiale $D_A$.

La première ouverture 31 du premier pavillon 30 s'étend dans un plan parallèle à la première ouverture 41 du second pavillon 40. Depuis sa première ouverture 31, le premier pavillon 30 s'étend dans une direction formant un premier angle d'ouverture $\alpha_1$. De même, depuis sa première ouverture 41, le second pavillon 40 s'étend dans une direction formant un second angle d'ouverture $\alpha_2$. Le premier angle d'ouverture $\alpha_1$ et le second angle d'ouverture $\alpha_2$ sont égaux et sont compris entre 60° et 90°

Le rapport entre le premier diamètre équivalent D et le second diamètre équivalent d varie entre 2 et 100. Le rapport entre la longueur d'un pavillon 30 ou 40 et la hauteur H de l'alvéole 18 varie entre 0,2 et 0,6.

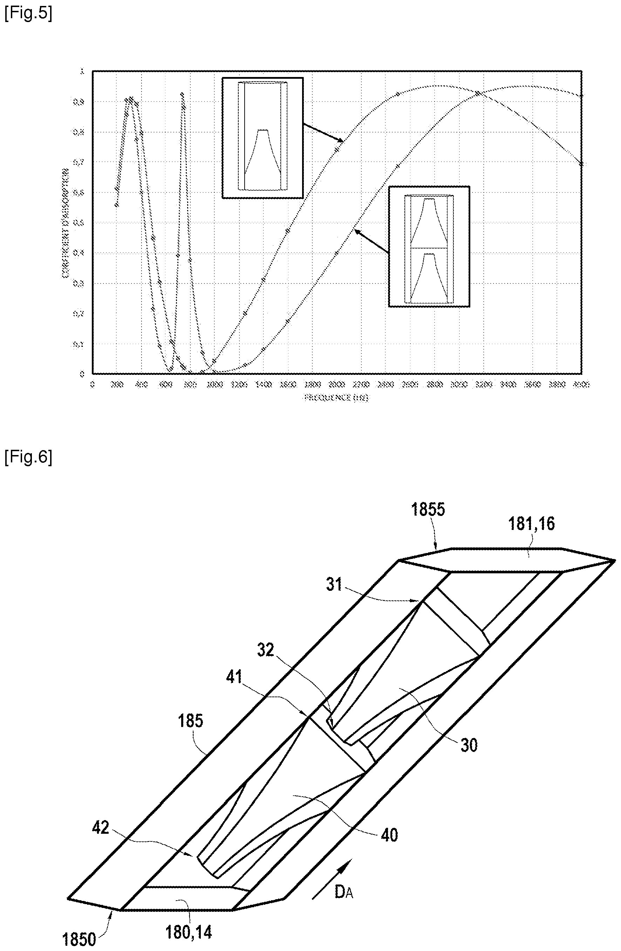

Par exemple, un panneau de traitement acoustique 10 comprenant des alvéoles 18 selon le premier mode de réalisation illustré sur les figures 3 et 4 avec une hauteur H de 80 mm, un premier diamètre équivalent D de 19 mm, une longueur L de pavillon de 35 mm, et un second diamètre équivalent d de 6 mm, peut permettre d'obtenir deux pics d'atténuation centrés approximativement autour de 300 Hz et de 750 Hz comme cela est illustré sur la figure 5.

La figure 5 est une représentation graphique du coefficient d'absorption en fonction de la fréquence de l'onde sonore en Hertz dans un premier cas d'une cellule de traitement acoustique avec un unique pavillon à l'intérieur de l'enceinte, et dans un second cas d'une cellule d'absorption acoustique comprenant deux pavillons à l'intérieur de l'enceinte selon le premier mode de réalisation de l'invention.

En outre, comme cela apparaît sur le figure 4, le premier pavillon 30 comprend une portion présentant une pente continue non droite s'étendant depuis son premier orifice 31, et le second pavillon 40 comprend une portion présentant une pente continue non droite s'étendant depuis son premier orifice 41.

En outre, comme cela est représenté sur la figure 4, le panneau de traitement acoustique 10 peut comprendre pour chaque cellule un septum interne formé par une paroi interne 183 poreuse s'étendant à l'intérieur de l'enceinte 185 et sur le premier orifice 41 du second pavillon 40.

Sur la figure 6 est illustrée schématiquement une vue en perspective d'une cellule d'absorption acoustique 18 selon un second mode de réalisation de l'invention.

Le second mode de réalisation illustré sur la figure 6 diffère du premier mode de réalisation illustré sur les figures 3 et 4 en ce que la direction axiale $D_A$ selon laquelle s'étendent les génératrices du cylindre formé par l'enceinte 185, n'est pas orthogonale aux plans dans lesquels s'étendent respectivement la paroi de fond 180 et la paroi d'entrée 181.

La direction axiale $D_A$ selon laquelle s'étend les parois 185 forme un angle d'inclinaison $\beta$ avec les parois d'entrée 181 et de fond 180, la paroi d'entrée 181 et la paroi de fond 180 s'étendant parallèlement l'une à l'autre.

L'angle d'inclinaison $\beta$ varie entre 0° et 60°. Cet angle permet d'augmente le volume de la cavité à l'intérieur de l'enceinte sans augmenter la distance séparant la paroi d'entrée 181 et la paroi de fond 180, cette distance étant mesurée selon une direction orthogonale aux plans dans lesquels s'étendent les parois de fond et d'entrée.

En outre, le second mode de réalisation diffère du premier mode de réalisation en ce que les premiers orifices 31 et 41 et les seconds orifices 32 et 42 des premier et second pavillons 30 et 40 s'étendent dans des plans non parallèles aux plans dans lesquels s'étendent la paroi d'entrée 181 et la paroi de fond 180.

Dans une variante, le premier pavillon 30 et le second pavillon 40 peuvent comprendre des surfaces dotées d'une rugosité non nulle pour augmenter les frottements viscoélastiques et ainsi augmenter l'absorption acoustique.

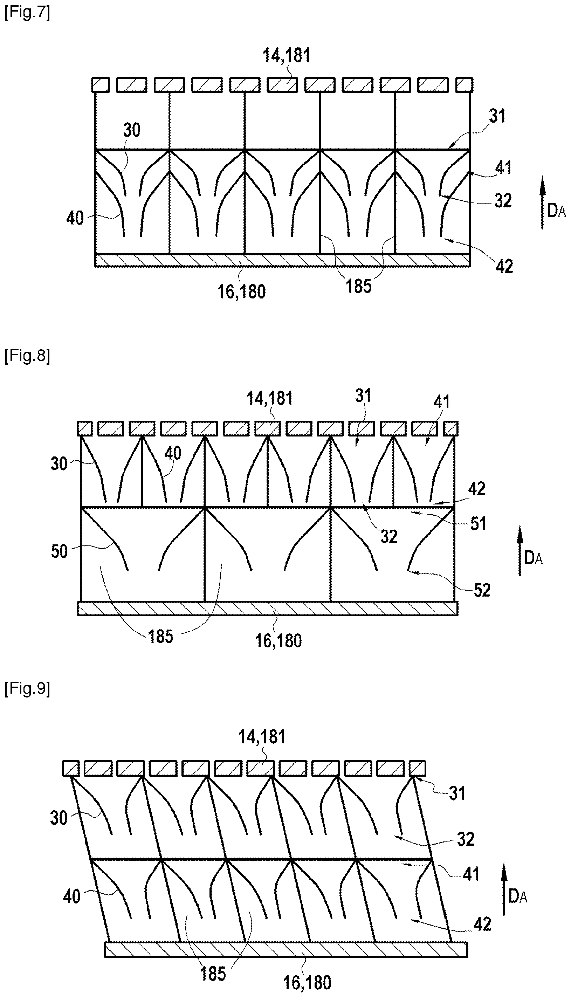

Sur la figure 7 est représenté schématiquement une vue en coupe d'une pluralité de cellules d'absorption acoustique 18 selon le troisième mode de réalisation de l'invention.

Le troisième mode de réalisation illustré sur la figure 7 diffère du premier mode de réalisation illustré sur la figure 4 en ce que ses cellules acoustiques 18 ne comprennent pas de paroi interne poreuse (ou septum) 183 entre les deux pavillons, et en ce que, pour chaque cellule 18, le premier pavillon 30 est inséré partiellement dans le second pavillon 40. Le second orifice 32 du premier pavillon 30 est ainsi disposé, selon la direction axiale $D_A$ entre le premier orifice 41 du second pavillon 40 et le second orifice 42 du second pavillon 40.

Ce troisième mode de réalisation illustré sur la figure 7 permet d'avoir un panneau de traitement acoustique plus compact que le panneau selon le premier mode de réalisation illustré sur la figure 4.

Sur la figure 8 est représenté schématiquement une vue en coupe d'une pluralité de cellules d'absorption acoustique 18 selon le quatrième mode de réalisation de l'invention.

Le quatrième mode de réalisation illustré sur la figure 8 diffère du premier mode de réalisation illustré sur la figure 4 en que chaque cellule acoustique 18 comprend au moins un troisième pavillon 50 s'étendant selon la direction axiale $D_A$ entre un premier orifice 51 et un second orifice 52, et en ce que le premier pavillon 30 et le second pavillon 40 de chaque cellule 18 sont juxtaposés l'un à côté de l'autre selon deux directions parallèles à la direction axiale $D_A$ et débouchent via leur second orifice respectif 32 et 42 sur le premier orifice 51 du troisième pavillon 50, le seconde orifice 52 du troisième pavillon 50 étant disposé en regard de la paroi de fond 180.

Dans une variante, plus de deux pavillons, juxtaposés les uns aux autres ou selon une même direction, peuvent déboucher dans un même pavillon disposé entre la paroi de fond 180 et lesdits trois ou plus pavillons.

Sur la figure 9 est représenté schématiquement une vue en coupe d'une pluralité de cellules d'absorption acoustique 18 selon le cinquième mode de réalisation de l'invention.

Les cellules acoustiques 18 du cinquième mode de réalisation illustré sur la figure 9 diffèrent des cellules acoustiques illustrées sur la figure 6 en ce que les premier et seconds orifices 31 et 32, et 41 et 42, de chaque pavillon 30 et 40 s'étendent parallèlement à la paroi d'entrée 181 et à la paroi de fond 180.

L'invention permet ainsi de fournir une cellule d'absorption acoustique pour l'absorption d'ondes sonores à basses fréquences de hauteur de cavité réduite et dont la plage fréquentielle de traitement puisse être modulée selon le besoin.

## Revendications

1. Cellule d'absorption acoustique (18) comprenant une

   paroi de fond (180) acoustiquement opaque, une paroi d'entrée (181) acoustiquement poreuse, une enceinte (185) s'étendant selon une direction axiale ($D_A$) entre une première extrémité axiale (1850) solidaire de la paroi de fond (180) et une seconde extrémité axiale (1855) solidaire de la paroi d'entrée (181), et un premier pavillon acoustique (30) s'étendant à l'intérieur de l'enceinte (185) entre un premier orifice (31) du premier pavillon (30) et un second orifice (32) du premier pavillon (30) plus petit que ledit premier orifice (31) du premier pavillon (30), le premier orifice (31) étant en regard de ladite paroi d'entrée (181),

   **caractérisée en ce qu'elle** comprend au moins un second pavillon (40, 50) s'étendant à l'intérieur de l'enceinte (185) entre un premier orifice (41, 51) du second pavillon (40, 50) et un second orifice (42, 52) du second pavillon (40, 50) plus petit que ledit premier orifice (41, 51) du second pavillon (40, 50), le second orifice (42, 52) du second pavillon (40, 50) étant disposé en regard de ladite paroi de fond (180), et
   soit le premier orifice (41, 51) du second pavillon (40, 50) est disposé en regard du second orifice (32) du premier pavillon (30), soit le premier pavillon (30) et le second pavillon (40) sont coaxiaux avec le premier pavillon (30) imbriqué au moins partiellement dans le second pavillon (40).

2. Cellule d'absorption acoustique (18) selon la revendication 1, dans laquelle l'enceinte (185) s'étend entre la paroi de fond (180) et la paroi d'entrée (181) en formant un angle d'inclinaison ($\beta$) non nul et non orthogonal avec la paroi d'entrée (181), d'une part, et avec la paroi de fond (180), d'autre part.

3. Cellule d'absorption acoustique (18) selon l'une des revendications 1 ou 2, dans laquelle la section du second orifice (32) du premier pavillon (30) est égale à la section du second orifice (42) du second pavillon (40), et le rapport entre la section de l'enceinte (185) à sa seconde extrémité (1855) et la section du second orifice du premier pavillon (30) est compris entre 2 et 100.

4. Cellule d'absorption acoustique (18) selon l'une des revendications 1 à 3, dans laquelle la distance entre le premier orifice (31) et le second orifice (32) du premier pavillon (30) selon la direction axiale ($D_A$) est égale à la distance entre le premier orifice (41) et le second orifice (42) du second pavillon (40) selon la direction axiale ($D_A$), et le rapport entre la distance entre le premier orifice (31) et le second orifice (32) du premier pavillon (30) selon la direction axiale ($D_A$) et la hauteur de l'enceinte (185) mesurée selon la direction axiale ($D_A$) entre sa première extrémité (1850) et sa seconde extrémité (1855) est compris entre 0,2 et 0,6.

5. Cellule d'absorption acoustique (18) selon l'une des revendications 1 à 4, dans laquelle à sa première ouverture (31) le premier pavillon (30) forme un premier angle d'ouverture ($\alpha_1$) avec un plan parallèle à la paroi d'entrée (181) de la cellule (18), et à sa première ouverture (41) le second pavillon (40) forme un second angle d'ouverture ($\alpha_2$) avec un plan parallèle à la paroi d'entrée (181) de la cellule (18).

6. Cellule d'absorption acoustique (18) selon la revendication 5, dans laquelle le second angle d'ouverture

($\alpha_2$) étant identique au premier angle d'ouverture ($\alpha_1$).

7. Cellule d'absorption acoustique (18) selon l'une des revendications 1 à 6, dans laquelle le premier pavillon (30) et le second pavillon (40) sont de forme et de dimensions identiques, le premier pavillon (30) et le second pavillon (40) comprenant chacun une portion cylindrique de section égale à la section de leur second orifice (32, 42), le rapport entre la longueur de la portion cylindrique selon la direction axiale ($D_A$) et la longueur du pavillon selon la direction axiale ($D_A$) étant inférieure ou égale à 0,8.

8. Cellule d'absorption acoustique (18) selon l'une des revendications 1 à 7, comprenant au moins une paroi interne (183) poreuse s'étendant à l'intérieur de l'enceinte (185) et sur le premier orifice (31, 41, 51) de l'un des pavillons (30,40,50).

9. Cellule d'absorption acoustique (18) selon la revendication 8, dans laquelle la paroi interne (183) est parallèle à ladite paroi d'entrée (181).

10. Cellule d'absorption acoustique (18) selon l'une des revendications 1 à 9, dans laquelle le premier pavillon (30) comprend une portion présentant une pente continue non droite s'étendant depuis son premier orifice (31), et le second pavillon (40) comprend une portion présentant une pente continue non droite s'étendant depuis son premier orifice (41).

11. Panneau (10) de traitement acoustique destiné à être disposé sur au moins une paroi d'un aéronef en contact avec un écoulement fluidique (F, $F_P$, $F_S$), le panneau (10) comprenant une pluralité de cellules d'absorption acoustique (18) selon l'une des revendications 1 à 10.

12. Turbomachine (1) destinée à être montée sur un aéronef, la turbomachine (1) comprenant au moins un panneau de traitement acoustique (10) selon la revendication 11.

13. Aéronef comprenant au moins une turbomachine (1) selon la revendication 12.

**Patentansprüche**

1. Schallabsorptionszelle (18), umfassend eine schallundurchlässige Bodenwand (180), eine schallporöse Eingangswand (181), ein Gehäuse (185), das sich in einer axialen Richtung ($D_A$) zwischen einem ersten axialen Ende (1850), das an der Bodenwand (180) befestigt ist, und einem zweiten axialen Ende (1855), das an der Eingangswand (181) befestigt ist, erstreckt, und ein erstes Schallhorn (30), das sich innerhalb des Gehäuses (185) zwischen einer ersten Öffnung (31) des ersten Horns (30) und einer zweiten Öffnung (32) des ersten Horns (30), die kleiner als die erste Öffnung (31) des ersten Horns (30) ist, erstreckt, wobei die erste Öffnung (31) der Eingangswand (181) zugewandt ist,

**dadurch gekennzeichnet, dass** sie zumindest ein zweites Horn (40, 50) umfasst, das sich innerhalb des Gehäuses (185) zwischen einer ersten Öffnung (41, 51) des zweiten Horns (40, 50) und einer zweiten Öffnung (42, 52) des zweiten Horns (40, 50), die kleiner als die erste Öffnung (41, 51) des zweiten Horns (40, 50) ist, erstreckt, wobei die zweite Öffnung (42, 52) des zweiten Horns (40, 50) der Bodenwand (180) zugewandt angeordnet ist, und entweder die erste Öffnung (41, 51) des zweiten Horns (40, 50) der zweiten Öffnung (32) des ersten Horns (30) zugewandt angeordnet ist oder das erste Horn (30) und das zweite Horn (40) koaxial zu dem ersten Horn (30) sind, das zumindest teilweise in dem zweiten Horn (40) verschachtelt ist.

2. Schallabsorptionszelle (18) nach Anspruch 1, wobei sich das Gehäuse (185) zwischen der Bodenwand (180) und der Eingangswand (181) erstreckt und dabei einen Neigungswinkel ($\beta$) ungleich null und nicht orthogonal zu der Eingangswand (181) einerseits und zu der Bodenwand (180) andererseits bildet.

3. Schallabsorptionszelle (18) nach einem der Ansprüche 1 oder 2, wobei der Querschnitt der zweiten Öffnung (32) des ersten Horns (30) gleich dem Querschnitt der zweiten Öffnung (42) des zweiten Horns (40) ist und das Verhältnis zwischen dem Querschnitt des Gehäuses (185) an seinem zweiten Ende (1855) und dem Querschnitt der zweiten Öffnung des ersten Horns (30) zwischen 2 und 100 liegt.

4. Schallabsorptionszelle (18) nach einem der Ansprüche 1 bis 3, wobei der Abstand zwischen der ersten Öffnung (31) und der zweiten Öffnung (32) des ersten Horns (30) in der axialen Richtung ($D_A$) gleich dem Abstand zwischen der ersten Öffnung (41) und der zweiten Öffnung (42) des zweiten Horns (40) in der axialen Richtung ($D_A$) ist und das Verhältnis zwischen dem Abstand zwischen der ersten Öffnung (31) und der zweiten Öffnung (32) des ersten Horns (30) in der axialen Richtung ($D_A$) und der Höhe des Gehäuses (185), gemessen in der axialen Richtung ($D_A$), zwischen seinem ersten Ende (1850) und seinem zweiten Ende (1855) zwischen 0,2 und 0,6 liegt.

5. Schallabsorptionszelle (18) nach einem der Ansprüche 1 bis 4, wobei das erste Horn (30) an seiner ersten Öffnung (31) einen ersten Öffnungswinkel ($\alpha_1$) mit einer Ebene parallel zu der Eingangswand (181) der Zelle (18) bildet und das zweite Horn (40) an seiner ersten Öffnung (41) einen zweiten Öffnungswinkel ($\alpha_2$) mit einer Ebene parallel zu der Eingangswand (181) der Zelle (18) bildet.

6. Schallabsorptionszelle (18) nach Anspruch 5, wobei der zweite Öffnungswinkel ($\alpha_2$) identisch mit dem ersten Öffnungswinkel ($\alpha_1$) ist.

7. Schallabsorptionszelle (18) nach einem der Ansprüche 1 bis 6, wobei das erste Horn (30) und das zweite Horn (40) identische Form und Abmessungen aufweisen, wobei das erste Horn (30) und das zweite Horn (40) jeweils einen zylindrischen Abschnitt mit einem Querschnitt gleich dem Querschnitt ihrer zweiten Öffnung (32, 42) umfassen, wobei das Verhältnis zwischen der Länge des zylindrischen Abschnittes in der axialen Richtung ($D_A$) und der Länge des Horns in der axialen Richtung ($D_A$) kleiner oder gleich 0,8 ist.

8. Schallabsorptionszelle (18) nach einem der Ansprüche 1 bis 7, umfassend zumindest eine poröse Innenwand (183), die sich innerhalb des Gehäuses (185) und an der ersten Öffnung (31, 41, 51) von einem der Hörner (30, 40, 50) erstreckt.

9. Schallabsorptionszelle (18) nach Anspruch 8, wobei die Innenwand (183) parallel zu der Eingangswand (181) ist.

10. Schallabsorptionszelle (18) nach einem der Ansprüche 1 bis 9, wobei das erste Horn (30) einen Abschnitt mit einer kontinuierlichen, nicht geraden Neigung umfasst, der sich von seiner ersten Öffnung (31) erstreckt, und das zweite Horn (40) einen Abschnitt mit einer kontinuierlichen, nicht geraden Neigung umfasst, der sich von seiner ersten Öffnung (41) erstreckt.

11. Schallbehandlungsplatte (10), die dazu bestimmt ist, an zumindest einer Wand eines Flugzeugs in Kontakt mit einem Fluidstrom (F, $F_P$, $F_S$) angeordnet zu sein, wobei die Platte (10) mehrere Schallabsorptionszellen (18) nach einem der Ansprüche 1 bis 10 umfasst.

12. Turbomaschine (1), die dazu bestimmt ist, an einem Flugzeug montiert zu sein, wobei die Turbomaschine (1) zumindest eine Schallbehandlungsplatte (10) nach Anspruch 11 umfasst.

13. Flugzeug, umfassend zumindest eine Turbomaschine (1) nach Anspruch 12.

**Claims**

1. An acoustic absorption cell (18) comprising an acoustically opaque bottom wall (180) an acoustically porous inlet wall (181), an enclosure (185) extending in an axial direction ($D_A$) between a first axial end (1850) integral with the bottom wall (180) and a second axial end (1855) integral with the inlet wall (181), and a first acoustic horn (30) extending inside the enclosure (185) between a first opening (31) of the first horn (30) and a second opening (32) of the first horn (30) that is smaller than said first opening (31) of the first horn (30), the first opening (31) facing said inlet wall (181),

   **characterized in that it** comprises at least one second horn (40, 50) extending inside the enclosure (185) between a first opening (41, 51) of the second horn (40, 50) and a second opening (42, 52) of the second horn (40, 50) that is smaller than said first opening (41, 51) of the second horn (40, 50), the second opening (42, 52) of the second horn (40, 50) being arranged facing said bottom wall (180), and either the first opening (41, 51) of the second horn (40, 50) is arranged facing the second opening (32) of the first horn (30), either the first horn (30) and the second horn (40) are coaxial and the first horn (30) is inserted at least partially in the second horn (40).

2. The acoustic absorption cell (18) according to claim 1, wherein the enclosure (185) extends between the bottom wall (180) and the inlet wall (181) while forming a nonzero inclination angle ($\beta$) not orthogonal with the inlet wall (181), on the one hand, and with the bottom wall (180), on the other hand.

3. The acoustic absorption cell (18) according to one of claims 1 or 2, wherein the cross section of the second opening (32) of the first horn (30) is equal to the cross section of the second opening (42) of the second horn (40), and the ratio between the cross section of the enclosure (185) at its second end (1855) and the cross section of the second opening of the first horn (30) is comprised between 2 and 100.

4. The acoustic absorption cell (18) according to one of claims 1 to 3, wherein the distance between the first opening (31) and the second opening (32) of the first horn (30) in the axial direction ($D_A$) is equal to the distance between the first opening (41) and the second opening (42) of the second horn (40) in the axial direction ($D_A$), and the ratio between the distance between the first opening (31) and the second opening (32) of the first horn (30) in the axial direction ($D_A$) and the height of the enclosure (185) measured in the axial direction ($D_A$) between its first end (1850) and its second end (1855) is comprised between 0.2 and 0.6.

5. The acoustic absorption cell (18) according to one of claims 1 to 4, wherein at its first opening (31) the first horn (30) forms a first opening angle ($\alpha_1$) with a plane parallel with the inlet wall (181) of the cell (18) and, at its first opening (41) the second horn (40) forms a second opening angle ($\alpha_2$) with a plane parallel with the inlet wall (181) of the cell (18).

6. The acoustic absorption cell (18) according to claim 5, wherein the second opening angle ($\alpha_2$) is identical to the first opening angle ($\alpha_1$).

7. The acoustic absorption cell (18) according to one of claims 1 to 6, wherein the first horn (30) and the second horn (40) have identical shapes and dimensions, the first horn (30) and the second horn (40) each comprising a cylindrical portion with a cross section equal to the cross section of their second opening (32, 42), the ratio between the length of the cylindrical portion in the axial direction ($D_A$) and the length of the horn in the axial direction ($D_A$) being less than or equal to 0.8.

8. The acoustic absorption cell (18) according to one of claims 1 to 7, comprising at least one porous internal wall (183) extending inside the enclosure (185) and over the first opening (31, 41, 51) of one of the horns (30, 40, 50).

9. The acoustic absorption cell (18) according to claim 8, wherein the internal wall (183) is parallel to said inlet wall (181).

10. The acoustic absorption cell (18) according to one of claims 1 to 9, wherein the first horn (30) comprises a portion having a continuous non-straight slope extending from its first opening (31), and the second horn (40) comprises a portion having a continuous non-straight slope extending from its first opening (41).

11. An acoustic treatment panel (10) intended to be arranged over at least one wall of an aircraft in contact with a fluid flow (F, $F_P$, $F_S$), the panel (10) comprising a plurality of acoustic absorption cells (18) according to one of claims 1 to 10.

12. A turbomachine (1) intended to be mounted on an aircraft, the turbomachine (1) comprising at least one acoustic treatment panel (10) according to claim 11.

13. An aircraft comprising at least one turbomachine (1) according to claim 12.

[Fig.1]

[Fig.2]

[Fig.3]

[Fig.4]

[Fig.5]

[Fig.6]

[Fig.7]

[Fig.8]

[Fig.9]

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 1858101
- FR 3070529

- US 2013186707 A1